# EUROPEAN PATENT SPECIFICATION

(11) **EP 3 984 732 B1**
(45) Date of publication and mention of the grant of the patent: **06.12.2023**
(21) Application number: 21200722.3
(22) Date of filing: 04.10.2021
(51) Int. Cl.: B29D 30/32

(54) **GREEN TIRE FORMING APPARATUS**
REIFENROHLINGFORMVORRICHTUNG
APPAREIL DE FORMAGE DE PNEUS CRUS

(30) Priority: 14.10.2020 JP 2020173407
(43) Date of publication of application: 20.04.2022
(73) Proprietor: Sumitomo Rubber Industries, Ltd., Kobe-shi, Hyogo-ken 651-0072 (JP)
(72) Inventor: YANO, Shunsuke, Kobe-shi, 651-0072 (JP); NAKATOGAWA, Takeshi, Kobe-shi, 651-0072 (JP); KITANI, Shinichi, Kobe-shi, 651-0072 (JP); ISHIHARA, Noboru, Kobe-shi, 651-0072 (JP); ONIMATSU, Hiroyuki, Kobe-shi, 651-0072 (JP)
(74) Representative: Manitz Finsterwald Patent- und Rechtsanwaltspartnerschaft mbB

(56) References cited:
- WO-A2-2018/111091
- US-A- 3 676 261
- US-A- 3 873 397
- US-A- 4 087 307

## Description

### BACKGROUND OF THE INVENTION

### Field of the Invention

The present invention relates to a green tire forming apparatus.

### Description of the Background Art

To date, a green tire forming apparatus that includes a bladder turning-up mechanism for turning up a tire component by using a bladder has been known (for example, see Japanese Laid-Open Patent Publication No. 2011-10197: US 4,087,307 or US3,873,397).

Meanwhile, a green tire forming apparatus that includes a mechanical turning-up mechanism for turning up a tire component by using a turning-up arm has been known (for example, see Japanese Laid-Open Patent Publication No. 2009-154471).

### SUMMARY OF THE INVENTION

The bladder turning-up mechanism and the mechanical turning-up mechanism have substantially different configurations from each other. Therefore, it is difficult to use both the configurations in one forming apparatus.

The present invention has been made in view of the aforementioned circumstances, and a main object of the present invention is to provide a green tire forming apparatus that allows both a bladder turning-up mechanism and a mechanical turning-up mechanism to be used in one forming apparatus.

The present invention is directed to a green tire forming apparatus that includes: a cylindrical shaping drum on which a tire component including a carcass ply is wound; a pair of bead core holding devices disposed on both outer sides of the shaping drum in a drum axial direction so as to hold, via the tire component, inner peripheral surfaces of a pair of bead cores mounted on external portions of the tire component; turning-up devices disposed on both outer sides of the pair of bead core holding devices, the turning-up devices configured to turn up a pair of protruding portions, of the tire component, which protrude outwardly of the bead cores in the drum axial direction, in a drum-radially-outward direction; and a pair of driving devices configured to move the turning-up devices in the drum axial direction. The turning-up devices are mounted, in an alternative manner, as one of: a first turning-up device including a pair of bladders configured to expand to turn up the pair of protruding portions outwardly in a drum radial direction, and pressing members configured to be driven by the driving devices to move inwardly in the drum axial direction and to press the expanded bladders inwardly in the drum axial direction; and a second turning-up device including a pair of sliding members configured to be driven by the driving devices to be movable in the drum axial direction, and a plurality of turning-up arms configured to turn up the pair of protruding portions according to movement of the sliding members in the drum axial direction.

In the green tire forming apparatus according to the present invention, the sliding members are preferably connected to the driving devices via a latch mechanism.

In the green tire forming apparatus according to the present invention, the latch mechanism preferably disconnects the sliding members and the driving devices from each other when a driving force of the driving devices in a drum-axially-outward direction becomes excessively high.

In the green tire forming apparatus according to the present invention, the latch mechanism preferably includes magnets that are mounted on the driving device side and adhere to the sliding members.

In the green tire forming apparatus according to the present invention, preferably, the driving devices each have a damper device for damping pressing in a drum-axially-inward direction.

In the green tire forming apparatus according to the present invention, the damper device preferably includes an air cylinder.

In the green tire forming apparatus according to the present invention, the driving devices preferably have a sensor for detecting a position of the latch mechanism relative to the driving devices in the drum axial direction.

In the green tire forming apparatus according to the present invention, the driving devices preferably have a sensor for detecting positions of the sliding members relative to the driving devices in the drum axial direction.

In the green tire forming apparatus according to the present invention, the pressing members are preferably mounted to the driving devices via connecting members.

In the green tire forming apparatus according to the present invention, preferably, the turning-up arms are each designed to have a length that does not interfere with the connecting members.

In the green tire forming apparatus according to the present invention, as the turning-up device, one of the first turning-up device including the bladders and the second turning-up device including the turning-up arms can be mounted in an alternative manner. Thus, both the bladder turning-up mechanism and the mechanical turning-up mechanism can be used in one forming apparatus.

### BRIEF DESCRIPTION OF THE DRAWINGS

FIG. 1 is a front view schematically illustrating a green tire forming apparatus according to one embodiment of the present invention;
FIG. 2 is a front view of a green tire forming apparatus having a first turning-up device mounted thereto in a state before turning-up;
FIG. 3 is a front view of the green tire forming apparatus having the first turning-up device mounted thereto in a state where the turning-up is being performed;
FIG. 4 is a front view of a green tire forming apparatus having a second turning-up device mounted thereto in a state before turning-up;
FIG. 5 is a front view of the green tire forming apparatus having the second turning-up device mounted thereto in a state where the turning-up is being performed;
FIG. 6 is a diagram illustrating the second turning-up device and a driving device; and
FIG. 7 is another diagram illustrating the second turning-up device and the driving device.

### DESCRIPTION OF THE PREFERRED EMBODIMENTS

One embodiment of the present invention will be described below with reference to the drawings.

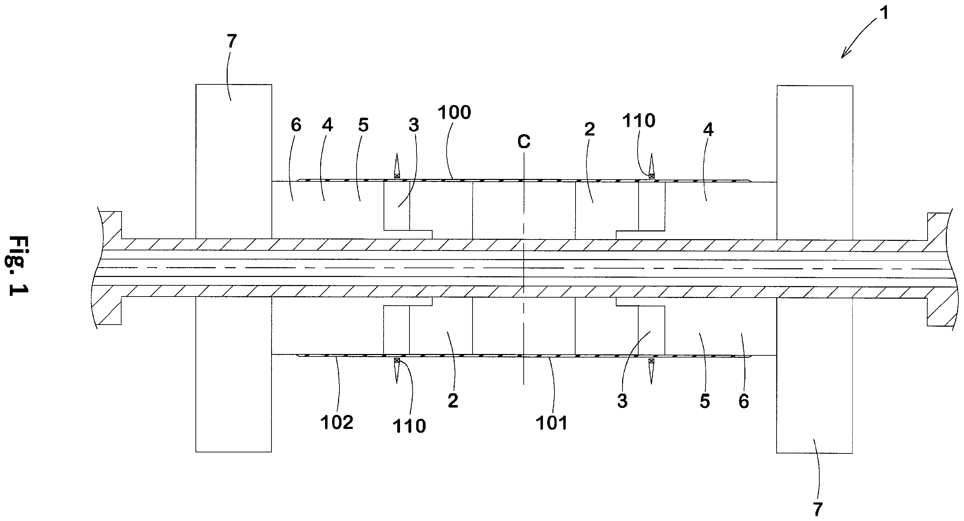

FIG. 1 is a front view of a green tire forming apparatus 1 according to the present embodiment. As shown in FIG. 1, the green tire forming apparatus 1 includes a cylindrical shaping drum 2, a pair of bead core holding devices 3 disposed on both outer sides of the shaping drum 2 in the drum axial direction, turning-up devices 4 disposed on both outer sides of the pair of bead core holding devices 3, and driving devices 7 for driving the turning-up devices 4.

On the shaping drum 2, a tire component 100 including a carcass ply is wound. The tire component 100 includes not only the carcass ply but also, for example, inner liner rubber, clinch rubber, and sidewall rubber.

A pair of bead cores 110 are mounted on the external portions of the tire component 100. The bead cores 110 are disposed on both sides, respectively, of the tire component 100 in the drum axial direction.

The bead core holding devices 3 are configured to hold the inner peripheral surfaces of the bead cores 110 via the tire component 100. The bead core holding devices 3 are disposed so as be symmetric about the center of the tire component 100 in the drum axial direction, that is, about an equator C. The bead core holding devices 3 move outwardly in the drum radial direction, extend the tire component 100 outwardly in the drum radial direction, and hold the inner peripheral surfaces of the bead cores 110. The bead core holding devices 3 are configured to be movable in the drum axial direction in a state where the bead cores 110 are held.

The bead cores 110 are disposed inwardly of outer ends of the tire component 100 in the drum axial direction. Therefore, the tire component 100 has a pair of protruding portions 102 that protrude outwardly of the bead cores 110 in the drum axial direction. The protruding portions 102 include, for example, sidewall rubber.

The turning-up devices 4 turn up the pair of protruding portions 102 of the tire component 100 outwardly in the drum radial direction. The protruding portions 102 are turned up by the turning-up devices 4, whereby the sidewall rubber is disposed outwardly of the carcass ply in the drum axial direction.

The driving devices 7 move the turning-up devices 4 in the drum axial direction. The driving device 7 may be divided in the radial direction. A position of the driving device 7 in the drum axial direction is detected by, for example, an encoder (not shown). An output signal from the encoder is inputted to a controller of the green tire forming apparatus 1. The controller controls the driving device 7 based on the output signal from the encoder. The turning-up device 4 is driven by the driving device 7 to move inwardly in the drum axial direction, to turn up the protruding portion 102.

In the green tire forming apparatus 1 of the present embodiment, one of a first turning-up device 5 or a second turning-up device 6 can be mounted as the turning-up device 4 in an alternative manner.

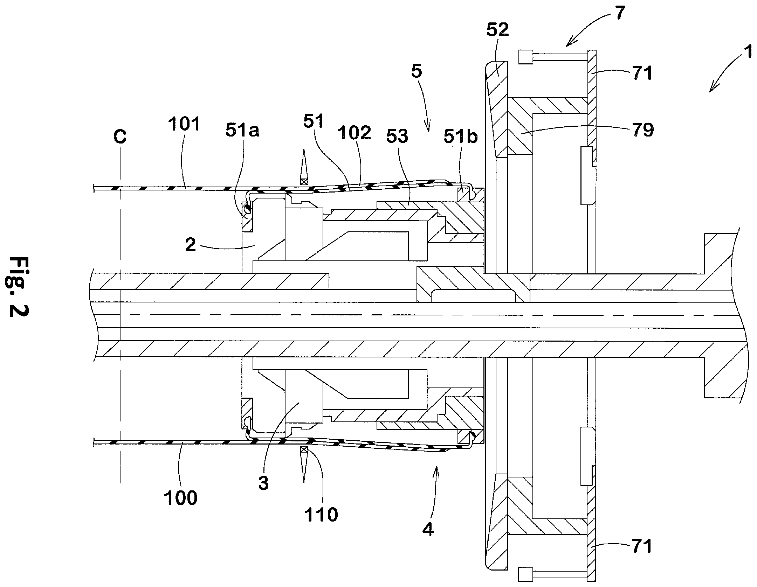

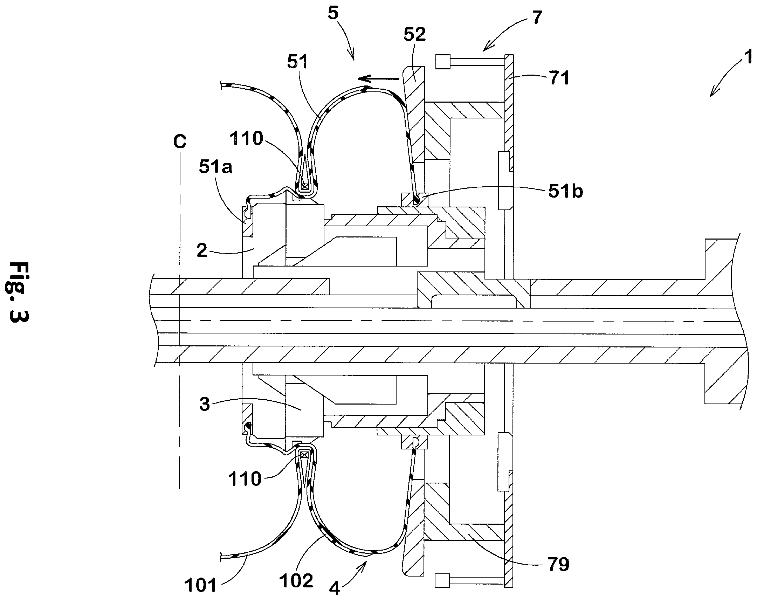

FIGS. 2 and 3 illustrate the green tire forming apparatus 1 having the first turning-up device 5 mounted thereto. FIG. 2 illustrates the green tire forming apparatus 1 in a state before the turning-up, and FIG. 3 illustrates the green tire forming apparatus 1 in a state where the turning-up is being performed.

The first turning-up device 5 includes a pair of bladders 51, and pressing members 52 for pressing the bladders 51 inwardly in the drum axial direction. One end portion 51a of each bladder 51 is secured to the shaping drum 2 at a position inward of the bead core holding device 3 in the drum axial direction. The other end portions 51b of the bladders 51 are attached to the shaping drum 2 via a pair of base members 53 at positions outward of the bead core holding devices 3 in the drum axial direction. The other end portion 51b of the bladder 51 is movable relative to the base member 53 in the drum axial direction when the bladder 51 is expanded.

The bladders 51 are disposed inwardly of the pair of the protruding portions 102 of the tire component 100 in the drum radial direction. The pair of the bladders 51 are expanded by air pressure generated by filling the inside of the bladders 51 with air, to turn up the pair of the protruding portions 102 outwardly in the drum radial direction.

As shown in FIG. 3, when the bladders 51 are expanded, the bead core holding devices 3 are moved in the drum axial direction, and the inside of a body portion 101 of the tire component 100 between the pair of bead cores 110 is filled with air. Thus, the body portion 101 of the tire component 100 is expanded outwardly in the drum radial direction. The body portion 101 and the protruding portions 102 of the tire component 100 are secured to each other, and a sidewall portion is formed from a bead portion of a green tire.

The pressing members 52 are driven by the driving devices 7 to move inwardly in the drum axial direction, approach the bead core holding devices 3, and press the expanded bladders 51 inwardly in the drum axial direction. Thus, both end portions of the protruding portions 102 are brought into close contact with the body portion 101.

After the protruding portions 102 have been turned up, the driving devices 7 are moved outwardly in the drum axial direction. According thereto, the bladders 51 and the pressing members 52 are returned to initial states shown in FIG. 2.

The first turning-up device 5 is mounted to the green tire forming apparatus 1 in the following manner. That is, the one end portions 5 1a of the bladders 51 and the base members 53 are secured to the shaping drum 2, and the pressing members 52 are secured to the driving devices 7. The other end portions 51b of the bladders 51 are secured to the base members 53 in advance.

Meanwhile, the first turning-up device 5 is dismounted from the green tire forming apparatus 1 by performing a process in a manner reverse to the above-described manner. That is, the one end portions 51a of the bladders 51 and the base members 53 are dismounted from the shaping drum 2, and the pressing members 52 are dismounted from the driving devices 7. By dismounting the first turning-up device 5 from the green tire forming apparatus 1, the second turning-up device 6 can be mounted to the green tire forming apparatus 1.

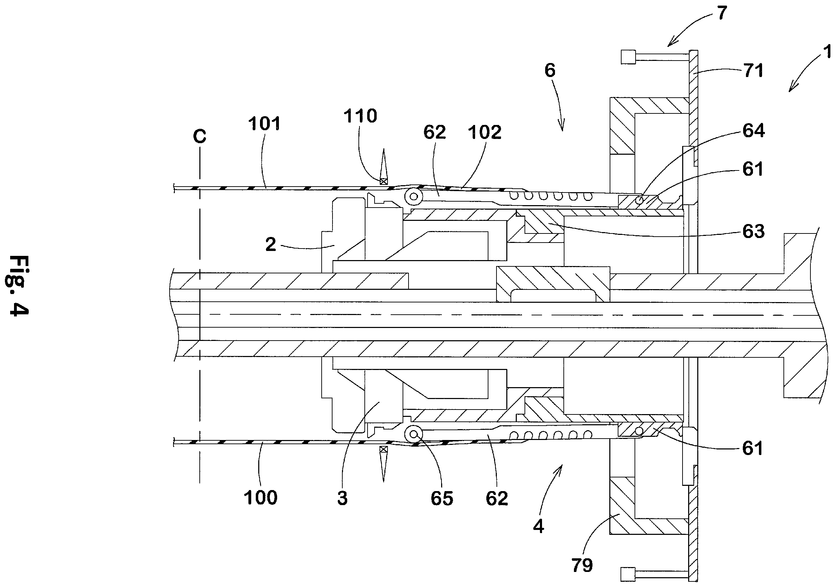

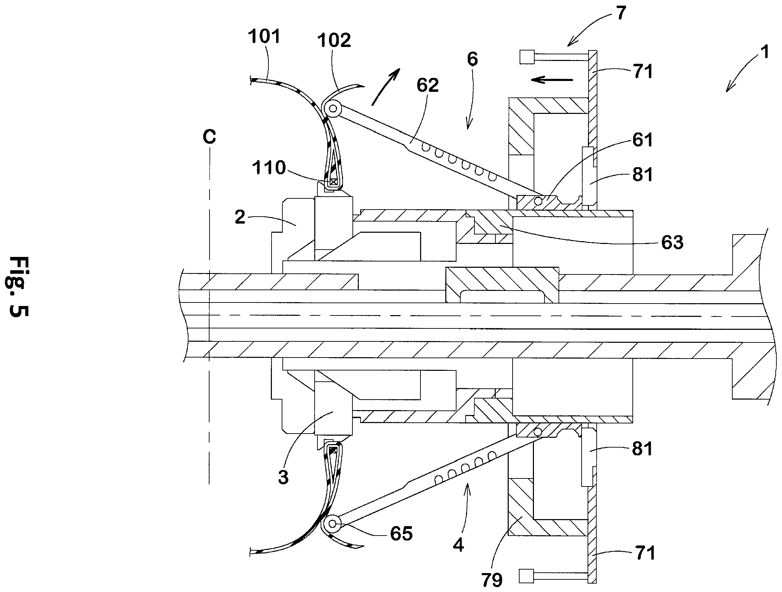

FIGS. 4 and 5 illustrate the green tire forming apparatus 1 having the second turning-up device 6 mounted thereto. FIG. 4 illustrates the green tire forming apparatus 1 in a state before the turning up, and FIG. 5 illustrates the green tire forming apparatus 1 in a state where the turning up is being performed.

The second turning-up device 6 includes a pair of sliding members 61, and turning-up arms 62 for turning up the pair of the protruding portions 102.

The sliding members 61 are mounted to the shaping drum 2 via a pair of base members 63. The sliding members 61 are supported by the base members 63 so as to be movable in the drum axial direction. The sliding member 61 is driven by the driving device 7 to move inwardly in the drum axial direction, and approach the bead core holding device 3. The sliding member 61 has a pivot 64 for the turning-up arm 62. The turning-up arm 62 is pivotally supported at the outer end portion in the drum axial direction so as to be pivotable about the pivot 64.

A plurality of the turning-up arms 62 are disposed in the drum circumferential direction. The inner end portions of the turning-up arms 62 in the drum axial direction are disposed inwardly of the pair of the protruding portions 102 of the tire component 100 in the drum radial direction.

As shown in FIG. 5, according to the sliding members 61 moving inwardly in the drum axial direction, the turning-up arms 62 pivot so as to move the end portions of the turning-up arms 62 outwardly in the drum radial direction, to turn up the protruding portions 102.

When the turning-up arms 62 pivot, the bead core holding devices 3 are moved in the drum axial direction, and the inside of the body portion 101 of the tire component 100 between the pair of the bead cores 110 is filled with air. Thus, the body portion 101 of the tire component 100 is expanded outwardly in the drum radial direction. The body portion 101 and the protruding portions 102 of the tire component 100 are secured to each other, and a sidewall portion is formed from a bead portion of a green tire.

Rollers 65 are preferably disposed at the end portions of the turning-up arms 62. The roller 65 rotates when the turning-up arm 62 operates. Thus, the protruding portion 102 is smoothly turned up.

After the protruding portions 102 have been turned up, the driving devices 7 move outwardly in the drum axial direction. According thereto, the sliding members 61 and the turning-up arms 62 are returned to initial states shown in FIG. 4.

The second turning-up device 6 is mounted to the green tire forming apparatus 1 by securing the base members 63 to the shaping drum 2. The sliding members 61 supporting the turning-up arms 62 are secured to the base members 63 in advance.

Meanwhile, the second turning-up device 6 is dismounted from the green tire forming apparatus 1 by dismounting the base members 63 from the shaping drum 2. Thus, the first turning-up device 5 can be mounted to the green tire forming apparatus 1.

In the green tire forming apparatus 1 of the present invention, as the turning-up device 4, one of the first turning-up device 5 including the bladder 51 or the second turning-up device 6 including the turning-up arm 62 can be mounted in an alternative manner. Thus, both the bladder turning-up mechanism and the mechanical turning-up mechanism can be used in one forming apparatus.

Therefore, variation of green tires which can be formed by a single green tire forming apparatus is increased. Various kinds of green tires can be produced in a small area for equipment.

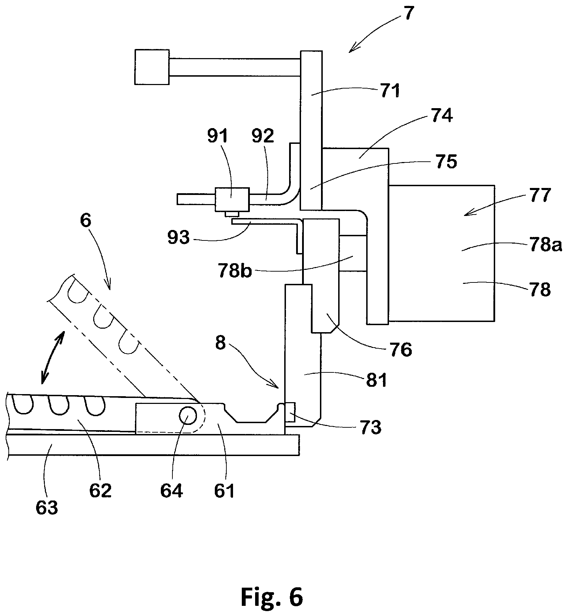

FIG. 6 illustrates the second turning-up device 6 and the driving device 7. The green tire forming apparatus 1 has a latch mechanism 8. The latch mechanism 8 connects a pusher ring 71 of the driving device 7 and the sliding member 61 to each other.

The latch mechanism 8 disconnects the sliding member 61 and the driving device 7 from each other when a driving force of the driving device 7 in the drum-axially-outward direction becomes excessively high. Thus, when the driving device 7 moves outwardly in the drum axial direction, the second turning-up device 6 is less likely to be damaged.

In the present embodiment, the latch mechanism 8 includes a claw member 81. The claw member 81 is attached to, for example, the pusher ring 71 of the driving device 7. The end portion of the claw member 81 is in contact with the sliding member 61, and a driving force of the driving device 7 in the drum-axially-inward direction is transmitted to the sliding member 61.

The claw member 81 preferably has a magnet 73 mounted thereto. The magnet 73 adheres to the outer end portion of the sliding member 61 in the drum axial direction. Thus, a driving force of the driving device 7 in the drum-axially-outward direction is transmitted to the sliding member 61. When a driving force of the driving device 7 in the drum-axially-outward direction becomes excessively high, the magnet 73 is separated from the sliding member 61. Thus, the second turning-up device 6 is released from the driving force of the driving device 7.

The magnet may be disposed at the sliding member 61. In this case, the magnet adheres to the end portion of the claw member 81.

In the present embodiment, the pusher ring 71 is preferably divided into a first ring 75 and a second ring 76. The first ring 75 and the second ring 76 are connected to each other via a damper device 77. The damper device 77 damps the pressing in the drum-axially-inward direction. When a driving force of the driving device 7 in the drum-axially-inward direction becomes excessively high, the second turning-up device 6 is protected by the damper device 77.

In the present embodiment, the damper device 77 includes an air cylinder 78. The air cylinder 78 has a body portion 78a connected to the first ring 75 via a mounting member 74. The air cylinder 78 has a rod portion 78b connected to the second ring 76.

A plurality of the air cylinders 78 are preferably disposed at predetermined intervals on the periphery of the second ring 76 so as to oppose the second ring 76. In this case, a linear bush (not shown) for guiding movement of the second ring 76 relative to the first ring 75 may be disposed between the air cylinders 78.

The air cylinder 78 is driven by air pressure, and presses the rod portion 78b inwardly in the drum axial direction. Thus, contact between the end portion of the claw member 81 and the sliding member 61 is maintained.

A sensor 91 is disposed at the first ring 75 of the driving device 7. The sensor 91 is mounted to the first ring 75 via an L-shaped mounting tool 92. Meanwhile, an L-shaped member 93 is mounted to the second ring. The end portion of the member 93 is spaced from the sensor 91 over a predetermined distance and disposed so as to oppose the sensor 91.

The sensor 91 detects whether or not the member 93 is near the sensor 91 (that is, a position of the latch mechanism relative to the driving device 7 in the drum axial direction). An output signal from the sensor 91 is inputted to the controller. The second ring 76 is connected to the first ring 75 via the air cylinder 78. Therefore, for example, if an abnormality occurs in the second turning-up device 6 or the like, the first ring 75 is moved inwardly in the drum axial direction relative to the second ring 76. When a signal indicating that the first ring 75 has been excessively moved inwardly in the drum axial direction relative to the second ring 76, and that the member 93 is outside a range detected by the sensor 91, is inputted to the controller, the controller stops the driving device 7. Thus, the second turning-up device 6 is protected.

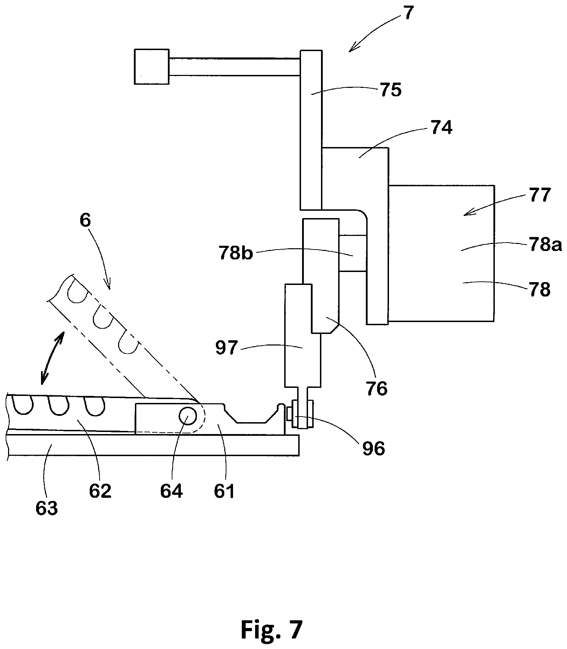

FIG. 7 illustrates the second turning-up device 6 and the driving device 7 on a cross-section different from that in FIG. 6.

The second ring 76 of the driving device 7 has a sensor 96. The sensor 96 is mounted to the second ring 76, at a portion at which the claw member 81 is not disposed, via a mounting tool 97. The sensor 96 is disposed at an inner end portion of the second ring 76 at a position opposing the outer end portion of the sliding member 61 in the drum axial direction so as to be spaced from the sliding member 61 over a predetermined distance.

The sensor 96 detects whether or not the sliding member 61 is near the sensor 96. An output signal from the sensor 96 is inputted to the controller. When a signal indicating that the sliding member 61 is outside a range detected by the sensor 96 is inputted to the controller, the controller stops the driving device 7. Thus, the second turning-up device 6 is protected.

As shown in FIG. 2 to FIG. 5, the driving device 7 has a connecting member 79. The connecting member 79 connects the pusher ring 71 and the pressing member 52 to each other when the first turning-up device 5 is mounted to the green tire forming apparatus 1. That is, the pressing member 52 is mounted to the driving device 7 via the connecting member 79.

When the second turning-up device 6 is mounted to the green tire forming apparatus 1, the pressing member 52 is dismounted from the connecting member 79, to avoid interference between the turning-up arm 62 of the second turning-up device 6 and the pressing member 52.

As shown in FIGS. 4 and 5, the connecting member 79 is left to be mounted to the pusher ring 71. Therefore, the turning-up arm 62 is designed so as not to interfere with the connecting member 79. More specifically, the pivot 64 of the turning-up arm 62 is disposed on the inner side in the drum axial direction and the turning-up arm 62 is designed to have a small length.

Although the green tire forming apparatus 1 according to the present invention has been described above in detail, the present invention is not limited to the above-described specific embodiment, and various modifications can be devised to implement the present invention.

## Claims

1. A green tire forming apparatus (1) comprising:
a cylindrical shaping drum (2) on which a tire component (100) including a carcass ply is wound;
a pair of bead core holding devices (3) disposed on both outer sides of the shaping drum (2) in a drum axial direction so as to hold, via the tire component (100), inner peripheral surfaces of a pair of bead cores (110) mounted on external portions of the tire component (100);
turning-up devices (4) disposed on both outer sides of the pair of bead core holding devices (3), the turning-up devices (4) configured to turn up a pair of protruding portions (102), of the tire component (100), which protrude outwardly of the bead cores (110) in the drum axial direction, in a drum-radially-outward direction; and
a pair of driving devices (7) configured to move the turning-up devices (4) in the drum axial direction, **characterised in that**
the turning-up devices (4) are mounted, in an alternative manner, as one of
a first turning-up device (5) including a pair of bladders (51) configured to expand to turn up the pair of protruding portions (102) outwardly in a drum radial direction, and pressing members (52) configured to be driven by the driving devices (7) to move inwardly in the drum axial direction and to press the expanded bladders (51) inwardly in the drum axial direction, and
a second turning-up device (6) including a pair of sliding members (61) configured to be driven by the driving devices (7) to be movable in the drum axial direction, and a plurality of turning-up arms (62) configured to turn up the pair of protruding portions (102) according to movement of the sliding members (61) in the drum axial direction.

2. The green tire forming apparatus (1) according to claim 1, wherein the sliding members (61) are connected to the driving devices (7) via a latch mechanism (8).

3. The green tire forming apparatus (1) according to claim 2, wherein the latch mechanism (8) disconnects the sliding members (61) and the driving devices (7) from each other when a driving force of the driving devices (7) in a drum-axially-outward direction becomes excessively high.

4. The green tire forming apparatus (1) according to claim 3, wherein the latch mechanism (8) includes magnets (73) that are mounted on the driving device (7) side and adhere to the sliding members (61).

5. The green tire forming apparatus (1) according to any one of claims 2 to 4, wherein the driving devices (7) each have a damper device (77) for damping pressing in a drum-axially-inward direction.

6. The green tire forming apparatus (1) according to claim 5, wherein the damper device (77) includes an air cylinder (78).

7. The green tire forming apparatus (1) according to claim 5 or 6, wherein the driving devices (7) have a sensor (91) for detecting a position of the latch mechanism (8) relative to the driving devices (7) in the drum axial direction.

8. The green tire forming apparatus (1) according to any one of claims 5 to 7, wherein the driving devices (7) have a sensor (96) for detecting positions of the sliding members (61) relative to the driving devices (7) in the drum axial direction.

9. The green tire forming apparatus (1) according to any one of claims 1 to 8, wherein the pressing members (52) are mounted to the driving devices (7) via connecting members (79).

10. The green tire forming apparatus (1) according to claim 9, wherein the turning-up arms (62) are each designed to have a length that does not interfere with the connecting members (79).

## Patentansprüche

1. Rohreifenformungsvorrichtung (1), umfassend:
eine zylindrische Formgebungstrommel (2), auf die eine Reifenkomponente (100), die eine Karkasslage umfasst, gewickelt ist;
ein Paar Wulstkernhalteeinrichtungen (3), die an beiden Außenseiten der Formgebungstrommel (2) in einer Trommelaxialrichtung angeordnet sind, um über die Reifenkomponente (100) Innenumfangsflächen eines Paares Wulstkerne (110), die an Außenabschnitten der Reifenkomponente (100) angebracht sind, zu halten;
Umschlageinrichtungen (4), die an beiden Außenseiten des Paares Wulstkernhalteeinrichtungen (3) angeordnet sind, wobei die Umschlageinrichtungen (4) so konfiguriert sind, dass sie ein Paar vorstehende Abschnitte (102) der Reifenkomponente (100), die von den Wulstkernen (110) in der Trommelaxialrichtung nach außen vorstehen, in einer Trommelradialrichtung nach außen umschlagen; und
ein Paar Antriebseinrichtungen (7), die so konfiguriert sind, dass sie die Umschlageinrichtungen (4) in der Trommelaxialrichtung bewegen,
**dadurch gekennzeichnet, dass**
die Umschlageinrichtungen (4) auf eine der alternativen Weisen montiert sind, nämlich eine von
einer ersten Umschlageinrichtung (5), die ein Paar Blasen (51), die so konfiguriert sind, dass sie sich derart ausdehnen, dass sie das Paar vorstehende Abschnitte (102) in einer Trommelradialrichtung nach außen umschlagen, und Druckelemente (52) enthält, die so konfiguriert sind, dass sie von den Antriebseinrichtungen (7) derart angetrieben sind, dass sie sich in der Trommelaxialrichtung nach innen bewegen und die ausgedehnten Blasen (51) in der Trommelaxialrichtung nach innen drücken, und
einer zweiten Umschlageinrichtung (6), die ein Paar Schiebeelemente (61), die so konfiguriert sind, dass sie von den Antriebseinrichtungen (7) derart angetrieben sind, dass sie in der Trommelaxialrichtung beweglich sind, und eine Vielzahl von Umschlagarmen (62) enthält, die so konfiguriert sind, dass sie das Paar vorstehende Abschnitte (102) entsprechend der Bewegung der Schiebeelemente (61) in der Trommelaxialrichtung umschlagen.

2. Rohreifenformungsvorrichtung (1) nach Anspruch 1, wobei die Schiebeelemente (61) über einen Verriegelungsmechanismus (8) mit den Antriebsvorrichtungen (7) verbunden sind.

3. Rohreifenformungsvorrichtung (1) nach Anspruch 2, wobei der Verriegelungsmechanismus (8) die Schiebeelemente (61) und die Antriebseinrichtungen (7) voneinander trennt, wenn eine Antriebskraft der Antriebseinrichtungen (7) in einer Richtung trommelaxial nach außen übermäßig hoch wird.

4. Rohreifenformungsvorrichtung (1) nach Anspruch 3, wobei der Verriegelungsmechanismus (8) Magnete (73) umfasst, die auf der Seite der Antriebseinrichtung (7) angebracht sind und an den Schiebeelementen (61) haften.

5. Rohreifenformungsvorrichtung (1) nach einem der Ansprüche 2 bis 4, wobei die Antriebseinrichtungen (7) jeweils eine Dämpfungseinrichtung (77) zur Dämpfung des Drucks in einer Richtung trommelaxial nach innen aufweisen.

6. Rohreifenformungsvorrichtung (1) nach Anspruch 5, wobei die Dämpfungsvorrichtung (77) einen Luftzylinder (78) umfasst.

7. Rohreifenformungsvorrichtung (1) nach Anspruch 5 oder 6, wobei die Antriebseinrichtungen (7) einen Sensor (91) zum Erfassen einer Position des Verriegelungsmechanismus (8) relativ zu den Antriebseinrichtungen (7) in der Trommelaxialrichtung aufweisen.

8. Rohreifenformungsvorrichtung (1) nach einem der Ansprüche 5 bis 7, wobei die Antriebseinrichtungen (7) einen Sensor (96) zum Erfassen von Positionen der Schiebeelemente (61) relativ zu den Antriebseinrichtungen (7) in der Trommelaxialrichtung aufweisen.

9. Rohreifenformungsvorrichtung (1) nach einem der Ansprüche 1 bis 8, wobei die Druckelemente (52) über Verbindungselemente (79) an den Antriebseinrichtungen (7) angebracht sind.

10. Rohreifenformungsvorrichtung (1) nach Anspruch 9, wobei die Umschlagarme (62) jeweils so gestaltet sind, dass sie eine Länge haben, die nicht mit den Verbindungselementen (79) kollidiert.

## Revendications

1. Appareil de formage de pneumatique cru (1) comprenant :
un tambour de conformage cylindrique (2) sur lequel un composant de pneumatique (100) incluant une nappe de carcasse est enroulé ;
une paire de dispositifs de maintien d'âmes de talon (3) disposés sur les deux côtés extérieurs du tambour de conformage (2) dans une direction axiale du tambour afin de maintenir, via le composant de pneumatique (100), des surfaces périphériques intérieures d'une paire d'âmes de talon (110) montées sur des portions externes du composant de pneumatique (100) ;
des dispositifs de retroussage (4) disposés sur les deux côtés extérieurs de la paire de dispositifs de maintien d'âmes de talon (3), les dispositifs de retroussage (4) étant configurés pour retrousser une paire de portions en projection (102), du composant de pneumatique (100), qui se projettent vers l'extérieur des âmes de talon (110) dans la direction axiale du tambour, dans une direction radialement extérieure du tambour ; et
une paire de dispositifs d'entraînement (7) configurés pour déplacer les dispositifs de retroussage (4) dans la direction axiale du tambour,
**caractérisé en ce que**
les dispositifs de retroussage (4) sont montés, d'une manière alternative, en à titre d'un dispositif parmi :
un premier dispositif de retroussage (5) incluant une paire de vessies (51) configurées pour s'élargir de manière à retrousser la paire de portions en projection (102) à l'extérieur dans une direction radiale du tambour, et des éléments de pressage (52) configurés pour être entraînés par les dispositif d'entraînement de manière à pouvoir être déplacés dans la direction axiale du tambour, et
un second dispositif de retroussage (6) incluant une paire d'éléments coulissants (51) configurés pour être entraînés par les dispositifs d'entraînement de manière à pouvoir être déplacés dans la direction axiale du tambour, et une pluralité de bras de retroussage (62) configurés pour retrousser la paire de portions en projection (102) en accord avec un déplacement des éléments coulissants (61) dans la direction axiale du tambour.

2. Appareil de formage de pneumatique cru (1) selon la revendication 1, dans lequel les éléments coulissants (61) sont connectés aux dispositifs d'entraînement (7) via un mécanisme de verrouillage (8).

3. Appareil de formage de pneumatique cru (1) selon la revendication 2, dans lequel le mécanisme de verrouillage (8) déconnecte les éléments coulissants (61) et les dispositifs d'entraînement (7) les uns des autres quand une force d'entraînement des dispositifs d'entraînement (7) dans une direction axialement extérieure du tambour devient excessivement élevée.

4. Appareil de formage de pneumatique cru (1) selon la revendication 3, dans lequel le mécanisme de verrouillage (8) inclut des aimants (73) qui sont montés sur le côté des dispositifs d'entraînement (7) et qui adhèrent aux éléments coulissants (61).

5. Appareil de formage de pneumatique cru (1) selon l'une quelconque des revendications 2 à 4, dans lequel les dispositifs d'entraînement (7) ont chacun un dispositif amortisseur (77) destiné à amortir un pressage dans une direction axialement intérieure du tambour.

6. Appareil de formage de pneumatique cru (1) selon la revendication 5, dans lequel le dispositif amortisseur (77) inclut un cylindre à air (78).

7. Appareil de formage de pneumatique cru (1) selon la revendication 5 ou 6, dans lequel les dispositifs d'entraînement (7) ont un capteur (91) destiné à détecter une position du mécanisme de verrouillage (8) relativement aux dispositifs d'entraînement (7) dans la direction axiale du tambour.

8. Appareil de formage de pneumatique cru (1) selon l'une quelconque des revendications 5 à 7, dans lequel les dispositifs d'entraînement (7) ont un capteur (96) destiné à détecter des positions des éléments coulissants (61) relativement aux dispositifs d'entraînement (7) dans la direction axiale du tambour.

9. Appareil de formage de pneumatique cru (1) selon l'une quelconque des revendications 1 à 8, dans lequel les éléments de pressage (52) sont montés sur les dispositifs d'entraînement (7) via des éléments de connexion (79).

10. Appareil de formage de pneumatique cru (1) selon la revendication 9, dans lequel les bras de retroussage (62) sont chacun conçus pour avoir une longueur qui n'interfère pas avec les éléments de connexion (79).
